# EUROPEAN PATENT APPLICATION

(11) **EP 3 375 820 A1**
(43) Date of publication of application: **19.09.2018**
(21) Application number: 17160614.8
(22) Date of filing: 13.03.2017
(51) Int. Cl.: C08L 63/00, B33Y 70/00, B29C 64/141, B29C 64/153, C08G 59/42

(54) **USE OF A THERMOSETTING POLYMERIC POWDER COMPOSITION**

(71) Applicant: TIGER Coatings GmbH & Co. KG, 4600 Wels (AT)
(72) Inventor: NGUYEN, Le-Huong, 4600 Wels (AT); HERZHOFF, Carsten, 4600 Wels (AT); BRÜSTLE, Bernhard, 4600 Wels (AT); BUCHINGER, Gerhard, 4600 Wels (AT)
(74) Representative: Sonn & Partner Patentanwälte

(57) **Abstract**

The present invention relates to the use of a thermosetting polymeric powder composition in a 3D printing process to produce a 3D duroplast object, the composition comprising at least one curable polymeric binder material with free functional groups, wherein during the 3D printing process the formed object is only partially cured and the printing process is being followed by a heat treatment step to fully cure the printed object into a 3D duroplast object. The invention furthermore relates to a 3D printing process using such a thermosetting polymeric powder composition and comprising an additional heat treatment step of the printed 3D object.

## Description

The present invention relates to the field of rapid prototyping (e.g. 3D Printing), and is particularly directed to the development of polymeric materials for producing functional parts, prototypes, models or tools by way of a 3D printing process.

In almost any field of mechanical engineering there is an existing need for the rapid production of prototypes. Laser sintering, as it is already known in the state of the art, is the widespread rapid prototyping technology enabling the direct manufacture of three-dimensional articles of high resolution and dimensional accuracy from a variety of powdered materials, including conventional polymer powders. Prototypes or even production parts may be efficiently and economically produced by this process, which is often referred to as Selective Laser Sintering (SLS^{®}, DTM Corporation, Austin, Texas) (referred to as SLS herein).

SLS was developed in the mid 1980's by Carl Deckard and Joseph Beaman in the Mechanical Engineering Department at the University of Texas. SLS is a powder based 3D model fabrication method using a high power laser, e.g. CO₂ or Nd:YAG, to sinter polymer powders to generate a 3D model. In the SLS process, a first layer of powder is deposited evenly onto a stage by a roller, and is then heated to a temperature just below the powder's melting point. Then, a laser beam is selectively scanned over the powder to raise the local temperature to the powder's melting point to fuse the single powder particles together. After the first layer is thereby completed, a second layer of powder is added, leveled, and again sintered in the desired areas. These steps are repeated to create a 3D model. An inert gas is routinely used to prevent oxidation during selective laser sintering.

Detailed description of SLS technology may be found in US 4,863,538 A, US 5,017,753 A and US 4,994,817 A. Furthermore, US 5,296,062 A describes a method and apparatus for selectively sintering a layer of powder to produce a part comprising a plurality of sintered layers.

Meanwhile, various powders have been developed for use in this technology. Reference is made in this respect, for instance, to DE 101 22 492 A1, EP 0 968 080 A1, WO 03/106146 A1, or DE 197 47 309 A1.

US 6,136,948 A and WO 96/06881 A provide detailed description of laser sintering process for producing moldings from powdered polymers. A wide variety of thermoplastic polymers and copolymers is disclosed in those documents, e.g. polyacetate, polypropylene, polyethylene and polyamide.

Polyamide-12 (PA 12) powder has proven particularly successful in the industry for SLS to produce moldings, in particular to produce engineering components. The parts manufactured from PA12 powder meet the high requirements demanded with regards to mechanical loading. EP 0 911 142 A1 describes the use of PA 12 powder for producing moldings by SLS. US 8,124,686 B describes the process to prepare the PA 12 powder suitable for SLS.

US 2007/0126159 A1 relates to the use of thermoplastic polyester powder in a shaping process and moldings produced from this polyester powder.

US 8,247,492 B2 and US 8,592,519 B2 provide thermoplastic polyester powder compositions reinforced with fibers that are useful in laser sintering. The documents also relate to the method of manufacturing articles from such powder compositions.

Fused deposition modeling (FDM) is another 3D printing process commonly used for modeling, prototyping, and production applications. The process works on an "additive" principle by laying down material in layers; for this a plastic filament or metal wire is unwound from a coil and supplies material to an extrusion nozzle which can turn the flow on and off. There is typically a worm-drive that pushes the filament into the nozzle at a controlled rate. The model or part is produced by extruding molten material through the nozzle to form layers as the material hardens immediately after extrusion. During FDM, the hot molten polymer is exposed to air, so operating the printing process within an inert gas atmosphere, such as nitrogen or argon, can significantly increase the layer adhesion and leads to improved mechanical properties of the 3D printed objects.

Yet another 3D printing process is the selective fusing of materials in a granular bed. The technique fuses parts of the layer and then moves upward in the working area, adding another layer of granules and repeating the process until the piece has built up. This process uses the unfused media to support overhangs and thin walls in the part being produced, which reduces the need for temporary auxiliary supports for the piece.

Selective laser melting (SLM) does not use sintering for the fusion of powder granules but will completely melt the powder by using a the high-energy laser beam to create fully dense materials in a layer-wise method that has mechanical properties similar to those of conventional manufactured materials.

Selective Heat Sintering (SHS) uses a thermal print head instead of a laser beam to produce 3D objects, the process is designed to use a thermoplastic powder. In the printer, a roller applies a layer of plastic powder across a heated build platform. The thermal print head traces the object's cross-sectional area over the powder, applying just enough heat to sinter the top layer of powder. Once the layer is complete, the process is repeated with the next layer until a complete 3D object is formed. Excess powder surrounding the object helps provide support for complex shapes and overhangs. Unused powder is also reusable for the next 3D print. Since thermal print heads are less expensive, the overall cost of selective heat sintering is more affordable than SLS.

Turning now to the materials used in the above mentioned 3D printing processes, a particular disadvantage of the use of semi-crystalline thermoplastics, e.g. PA 12, is that it leads to shrinkage problems, therefore it is complicate to produce accurate parts. In another aspect, the use of semi-crystalline thermoplastics also provides dense parts, which may not be an advantage for some applications where high porosity for light weight parts but with a remaining part strength is preferred. In such applications, amorphous thermoplastics are preferred over semi-crystalline thermoplastics like PA 12. However, a disadvantage of amorphous thermoplastics is high viscosity, which permits coalescence only above melting point or above the glass transition temperature of the thermoplastics used.

Another disadvantage of the use of thermoplastic powder materials is that parts produced from it have only low dimensional stability at high temperature working conditions.

On the other hand, chemically crosslinked (cured) polymers, so called thermosets, have outstanding thermal and chemical properties and are irreplaceable in demanding applications, such as in structural parts needed by the aircraft and automotive industries.

Thermoset materials have so far been utilized only in liquid form and also only in laser-stereolithography, a process that fabricates 3D objects in a bath of liquid photopolymer. This process, however, needs complicated support structures to retain the interim material produced after each printing step in the liquid bath. Due to the liquid form of the thermoset material required for this technique, the choice of material variety is limited.

US 2007/0241482 A1 relates to the production of three dimensional objects by use of electromagnetic radiation. The material system disclosed in this document and used for 3D printing comprises a granular material including a first particulate adhesive selected from the group consisting of a thermoset material and a thermoplastic material and an absorber (fluid) capable of being heated upon exposure to electromagnetic energy sufficiently to bond the granular material. The absorber process described in this document provides a way to deliver heat to a printed layer in a 3D printer. In such a process, a dry particulate building material is treated with a liquid deposit in a cross-section of an article to be built, where the liquid engenders solidification in the particulate build material by means of the absorber used.

The research group at Harvard University Cambridge reported on "3D-Printing of Lightweight Cellular Composites" (Adv. Mater. 2014, V 26, Issue 34, 5930-5935). The fiber reinforced composite 3D part described in this document was made of an epoxy-based ink and manufactured by 3D extrusion printing technique.

US 2014/0121327 A1 describes a process for producing a crosslinked powder using Diels-Alder reaction. A disadvantage of this Diels-Alder system is the limitation of material variety due to the specific chemistry requirements of material for Diels-Alder reaction. Another disadvantage is that the Diels-Alder reaction is thermoreversible and may not allow for applications requiring high thermostability.

In the SLS process, high power lasers, e.g. CO₂ and Nd:YAG, are used to sinter polymer powders in order to generate a 3D model. A CO₂ laser was already successfully used to completely cure thermosetting powder (Lala Abhinandan 26/SPIE Vo. 2374 & J. Laser Appl. 11, 248, 1999; Giuseppina Simane, Progress in Organic Coatings 68, 340-346, 2010). The experiments and results in these documents referred to 2D applications, not to 3D printing applications.

WO 2008/057844 A1 D1 is directed to powder compositions which include at least one polymer powder that is preferably laser sinterable, together with reinforcing particles. According to this document a laser beam selectively irritates the powder layer within the defined boundaries of the design, resulting in melting of the powder on which the laser beam falls. The control mechanism operates the laser to selectively sinter sequential powder layers, eventually producing a complete article comprising a plurality of layers sintered together. The term "laser sinterable polymer powder" as used in this document is defined to refer to a powder which is capable of being melted by a laser beam of the LS (laser sintering) machine.

XP-002754724 (JP 20080107369) describes a composite material powder which can be used for the manufacture of a moulded product by selective laser sintering. The composite powder comprises spherical aggregates and a resin powder, said spherical aggregates comprising a spherical thermosetting resin curing material and spherical carbon. As an example, use of phenol resin material and polyamide 12 is disclosed.

US 2004/0081573 A1 discloses a polymeric binder material comprising thermoplastics and thermoset polymers together with metal particles and metal hydride for forming a green article, after removal of unfused material from the green article it is placed in an oven or finance to decompose and drive off the binder and sinter the metal substrate particles. During printing, the powder is fused, or sintered, by the application of the laser energy that is directed to those portions of the powder corresponding to a cross section of the article. After defusing powder in each layer, an additional layer of powder is then dispensed, and the process repeated, with fused portions of later layer fusing to fused portions of previous layers until the article is complete.

It is thus one object of the present invention to provide, for the rapid prototyping process in form of 3D printing, in particular for the SLS, FDM and SHS processes, a powder material being capable of curing reactions within the printing process to form a 3D object with good mechanical properties, adequate stability, good end use of temperature and for light weight applications. Although several polymeric powders have already been developed for the 3D printing technology, the existing materials typically suffered from one or more drawbacks such as, e.g. cost, ease of use, shrinkage problem, mechanical properties or stability at elevated temperature environments. Furthermore, 3D printing has been developed for thermoplastic materials but not for a 3D printing technique for a thermoset polymer powder system where curing occurs during melting (sintering). The challenge for such a printing technique is that a thermoset polymer powder must be melted and at least partially be cured under the very short energy exposure of the 3D printing process, leaving free functionalities for curing/cross-linking with the next printed layer.

Thus, there is a need for the developments of a new class of polymeric powder compositions useful in a 3D printing process, which compositions comprise curable polymeric binder material, composites produced when using such powder compositions, especially fiber reinforced composites, and the suitable printing processes when using such polymeric powder compositions, enabling the production of specific 3D objects when outstanding thermal and chemical properties as well as structural dimensional stability are required. There is also a need for a process to print and finish 3D objects using such powder compositions.

To surpass the disadvantages of the state of the art as mentioned above, the present invention provides for the use of a thermosetting polymeric powder composition in a 3D printing process to produce a 3D duroplast object, the composition comprising at least one curable polymeric binder material with free functional groups, wherein during the 3D printing process the formed object is only partially cured and the printing process is being followed by a heat treatment step to fully cure the printed object into a 3D duroplast object. In connection therewith, if here and in the following the term "fully cured" is used, it is understood that this should refer to the degree of curing, which leaves practically no unreacted functional groups within the heat treated 3D duroplast object, in particular it refers to a degree of curing of 90 % or above, preferably of 99 % or above, while the term "partially cured" refers to a degree of curing of below 90 %.

The present invention also enables production of 3D objects with high porosity but remaining part strength, light weight and durability as honeycomb structures utilized in composite materials. In the curable polymeric binder material as used according to the present invention, the heating during the 3D printing process results in both sintering/melting as well as at least partial chemical crosslinking of the curable polymeric binder material. The composition as used is formulated in a way that the curing reactions will occur under very short energy (e.g. laser) exposure, therefore the powder composition cures (crosslinks) at least partially already during sintering/melting. In case of pure UV curing systems also UV light is necessary for curing.

Preferably, the object formed after the 3D printing process has a curing degree of below 90 %, preferably below 60 %, most preferably between 35 % and 60 %. It has surprisingly been found that with a curing degree of below 30 %, the printed object is very brittle, difficult for post-process and also the level of mechanical properties after postcuring such objects was significantly lower than the properties of 3D duroplast objects printed with a curing level of above 35 % but below 90 %. The best results were achieved when objects were printed with a curing level of between 35 and 60 % and then heat treated.

To achieve durable printed parts made out of the thermosetting polymeric powder composition, one or several of the below mentioned approaches can be applied or controlled to obtain good mechanical properties of the printed objects. These approaches can be combined with the heat treatment of the present invention:
1. A combination of UV curing inside the SLS machine via formulating UV initiators and/or thermal radical initiators in the powder compositions,
2. varying the SLS process parameters, like powder bed temperatures, energy density of laser, laser power, powder layer thickness, etc., and using a process which allows for the suitable curing degree after the SLS step with special laser scanning direction including heat management to avoid thermal bleeding occurring in powder bed during process,
3. varying the properties of the polymeric powder composition, like varying the particle size, particle size distribution (multi-modal) and sphericity of the powder composition and
4. varying the polymer/binder structures (e.g. higher aliphatic content of polyester for more flexible materials) and/or the composition of the powder composition with fillers, thermoplastics or fiber reinforcements (e.g. whiskers fibers)

The post curing according to the present invention, i.e. the additional heat treatment step of the finished 3D object after printing, is beneficial if the end use of printed 3D objects requires high performance while the object is also required to possess high resolution and dimensional accuracy with complex detailed structures of the printed parts. It was found that durability and resilience of printed 3D objects is strongly dependent on the energy input during the printing step. However, it was also observed that when the energy/energy density used in each printing pass was sufficient enough to achieve 90-100 % curing degree of the finished 3D object, the 3D object thus printed lost its dimensional accuracy and high resolution or high detailed structure due to a thermal bleeding effect: As soon as there is a high number of parts in the build area, the energy input (for instance by the laser) heats the parts and the surrounding powder up so much that the powder bed starts to cake. Additionally, the heat of the exothermic curing reaction may play a role. To reduce thermal bleed there are some options:
- Reduce number of parts per layer
- Reduce input energy
- rearrange scanning (passing) order of the print head to avoid thermal bleeding, for example as shown below: 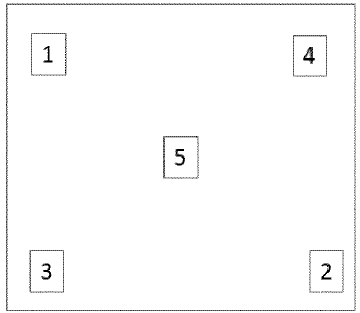 Scanning (passing) order to avoid thermal bleeding

With regard to reducing the number of parts per layer, while this may provide a temporary solution, it is not desired from a productivity perspective and may just delay the problems. Another option could be to rearrange the parts in such a way that there are fewer parts per layer to be sintered. This should improve the stability of the process and give fewer thermal problems.

It was generally observed that the mechanical strength of printed parts depends on the curing degree of the parts after the 3D printing process. Higher curing degree of the printed parts leads to better mechanical properties. In addition to the heat treatment of the printed object according to the present invention, in order to obtain a 3D duroplast object, a high curing degree of the printed object can be managed via 1) SLS process parameters, such as laser density, number of scanning to increase the interaction time between the laser and the powder particles, thickness of powder layer and powder bed temperature and also via 2) adding IR absorber or/and by adjusting the reactivity of powder compositions.

Furthermore, multiple passes of the printer head/number of scans by the laser beam do lead to more material being molten and probably enhances the coalescence of powder particles. Based on this fact, one to a maximum of four passes/scans per layer are chosen, preferably one or two passes/scans per layer depending on the energy/energy density provided.

Preferably, after the heat treatment step, the 3D duroplast object has a curing degree of 90 % or above, especially when using known 3D printing techniques in combination with at least one curable polymeric binder material. While it is also possible to obtain a curing degree of the printed 3D object of higher than 90 % after printing process, such objects showed high mechanical strength, however, only low resolution and low dimensional and/or geometric accuracy. When using the additional heat treatment step of the printed 3D product according to the present invention, most preferably on a printed 3D object with a curing degree of between 35 and 60 % after the actual printing process, a printed 3D product with high strength, good performance and still high resolution and good dimensional accuracy can be obtained.

The powder composition as used according to the present invention can be based on thermoset powder coating formulations already known in the state of the art, comprising curable polymeric binder powders, crosslinking (curing) agents, catalysts, accelerators, flow agents, absorbers, additives, fillers, plasticizers and pigments and can be modified to fulfill all material requirements for use in a 3D printing process. Objects produced with such thermosetting powder compositions according to the present invention could have applications in many fields, including the automotive and aircraft industry (especially regarding fiber reinforced composite components), where lightweight materials hold a key to achieving aggressive government-mandated fuel economy standards. Further applications for lightweight and high porosity printed 3D object and parts could be for instance the surface, base, membrane and/or lining of skis or generally any 3D sport tools requiring high porosity and light weight.

Furthermore, another preferred embodiment of the present invention provides that the curable polymeric binder material is selected from the group comprising compounds with at least two functional groups comprising carbon-carbon double bonds, compounds with at least two epoxy functional groups, compounds with at least two carboxylic acid functional groups, compounds with at least two hydroxyl functional groups, compounds derived from acrylic acid or methacrylic acid and/or mixtures thereof, and that after the 3D printing process free functional groups of the different layers of the formed object are reacting with each other to form the 3D duroplast object. The curable polymeric binder material and the curing agent can thus, for instance, be selected from the group consisting of epoxy with amines, amides, amino, polyphenols, acid anhydrides, multifunctional acids; epoxy with phenolic resins, epoxy with carboxylated polyester (namely hybrid systems); carboxylated polyester with hydroxyalkylamide (HAA), triglycidylisocyanurat (TGIC), glycidylester-epoxyresins (hybrids); hydroxyl-terminated polyester with polyisocyanates (blocked isocyanate or uretdione); GMA-acrylate system (epoxy functional acrylic resins cured with dicarboxylic acids), carboxyl-acrylate (carboxylated acrylic resin cured with epoxy), hydroxyl-acrylate (hydroxyl functional acrylic resins cured with blocked isocyanates); unsaturated polyesters; polyurethane/urea; isocyanate/alcohol; reactive functional polyamides, carboxylated polyamide with epoxy, thermal and/or UV radical initiators, IR or UV curable polymers and/or mixtures of two or more of said compounds and/or systems.

The present invention provides 3D articles having improved thermal stability with good flexibility and elasticity since they comprise fully cured and crosslinked duroplasts and are therefore not meltable like 3D articles made solely of thermoplast. For the flexibility it was surprisingly found to be beneficial that when a thermosetting polymeric powder composition in a 3D printing process to produce a 3D duroplast is used, the composition should comprise in addition to at least one curable polymeric binder material also at least one thermoplast having a Tg and/or Mp below the temperature provided in a pass of the printing step. With or without such a thermoplast, a preferred embodiment of the present invention is that during each pass of the printing step said polymeric binder material is at least partially cured within the layer thus formed and also at least partially crosslinked with the previous layer.

In particluar, one of the thermoplasts present in the composition can have functional groups able to react with the polymeric binder material.

One embodiment of the invention comprises thermoplast(s) which is/are present in an amount of up to 30 wt%, preferable between 5 and 20 wt% of the total composition, more preferable between 5 and 15 wt%.

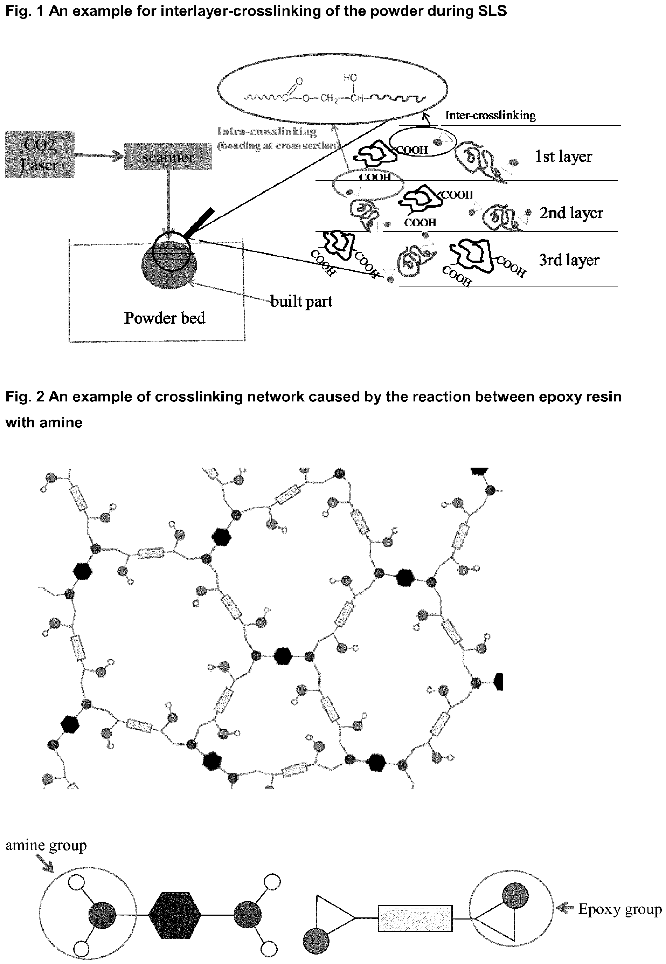

During the melting/sintering step of the 3D printing process, part of the energy provided by the process in each printing pass is penetrating through the top layer and causes crosslinking reactions of the free functionalities left on the surface of the previously printed layer with free functionalities in the top layer and eventually also completing the inter-crosslinking within the previously printed layer, thereby improving the curing degree and also physical properties of the printed part. The energy density should not be too high to avoid polymer degradation, but still must be sufficient to provide for cross-linking between the printed layers, improving the curing degree of the previously printed layer and melting the thermoplast. The scanned section of powder from one layer can remain partially molten (partially crosslinked) while the next layer of powder is spread over the existing one. When the print head scans this next layer and the heat affected zone reaches the full thickness of it, molten powder chemically reacts with molten powder (Fig. 1).

It is also possible to provide for free functionalities in each printed layer via the composition of the polymeric powder according to the present invention, for instance by providing an only non-stoichiometric amount of curing agent in each layer, or by way of the catalyst amount or activity, catalysts are employed, by the particle size distribution (heat absorption for melting is depending from particle size, which means that with bigger particles only a small amount of heat is left for curing within the same laser scanning) and also by the individual thickness of each printed layer.

The powder composition of each printed layer is not fully cured during the energy input of each printing step. The curing degree of a printed 3D object after the printing step (for example by SLS) may only be between 35 and 60 %, such printed 3D object can be achieved with high resolution, good detailed complex structures and still have sufficient strength to undergo a following post-processing. Post-curing of a printed 3D object which has intentionally not been fully cured during the printing steps has surprisingly been found to be beneficial in case the end use of printed 3D objects requires high mechanical properties.

According to a preferred embodiment of the present invention, the heat treatment step of the printed object comprises using a temperature ramp of from 50 to between 110 and 160 °C with a heating rate of not higher than 20 °C/h and preferably of 5 to 10 °C/h and then holding the 3D object at a temperature of between 110 and 160°C until it has a curing degree of 90 % or above, preferably of 99 % or above and/or for min 2h. Post curing according to the present invention can for instance be performed in a programmable Thermoconcept KM 20/13 chamber oven but also other post curing conditions and/or apparatus can be used. Beside the applications in SLS, the post curing step can be used to produce improved 3D object after printing 3D object with other techniques, such as for instance Fused Deposition Modeling (FDM) or Selective Heat Sintering (SHS) or any other known 3D printing process in which curable polymeric binder material can be used.

The powder composition as used according to the present invention comprises preferably at least one, more preferably mainly amorphous curable polymeric binder material, preferably in an amount of from 60 to 100 wt-% of the total binder content. This results in cured (crosslinked) printed 3D objects with high porosity, produced by for instance the SLS process. When this high porosity structure is additionally reinforced with short fibers, e.g. "whiskers", the object gains mechanical properties and also shows the unique lightweight properties of conventional honeycomb composite material.

According to a preferred embodiment of the present invention, the composition as used comprises in addition to the at least one curable polymeric binder material also at least one member of the group consisting of curing agent, catalyst, initiator, and mixtures thereof, which member is able to cure said polymeric binder material. The use of chemical crosslinking in the process according to the present invention also enables the production of high dense 3D objects, which are limited when using the amorphous thermoplastic systems according to the state of the art in for instance Selective Laser Sintering. Upon application requirements, the formulation of the curable polymeric binder material as used according to the present invention can be tailor made with the right curing agents and fillers to achieve high dense 3D objects.

The powder composition used according to the present invention may therefore comprise a curable polymeric binder material (a) and at least one curing agent (b), where (a) and (b) are able to react with each other to form a cured network. A catalyst and/or initiator (for UV-systems) may be added, either instead of or together with the curing agent, to initiate the curing reaction or to accelerate the reaction once started, depending on the specific chemistry of the reaction.

It is also preferred that the polymeric binder material is curable by polyaddition, and/or polycondensation and/or radical polymerization. Such curing mechanisms can also include a more specific polymerization.

Another option to improve the flexibility of the printed thermosetting 3D parts is to use a curable binder system where the polymeric binder material contains a polyester which is build up from at least 2,5 wt-%, preferably 5 wt-% and most preferably 10 wt-% linear aliphatic monomers, the percentage being based on the overall monomer content.

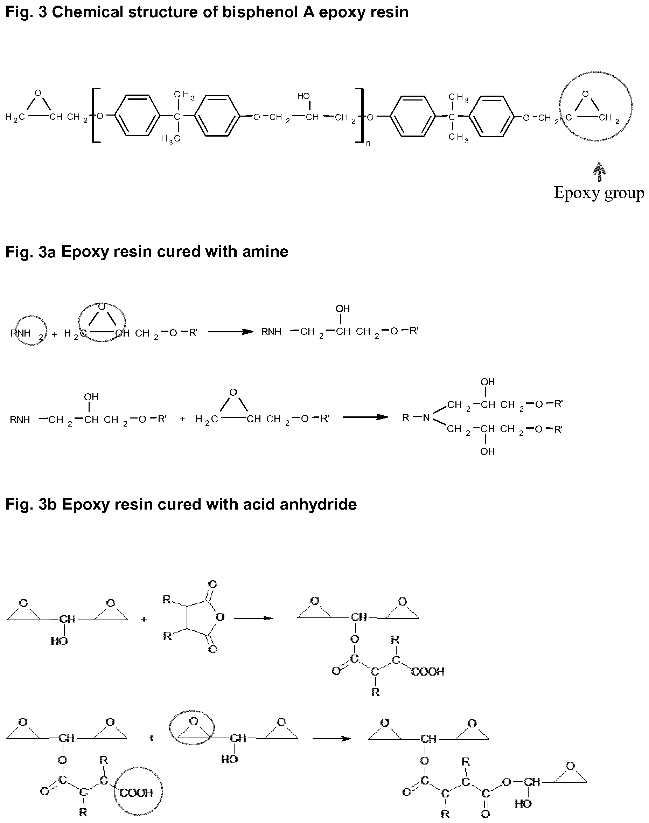

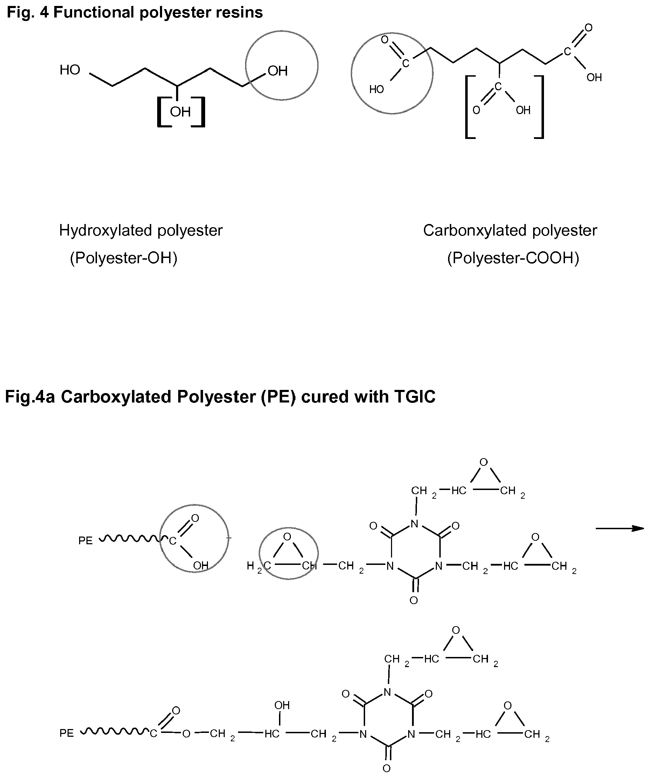

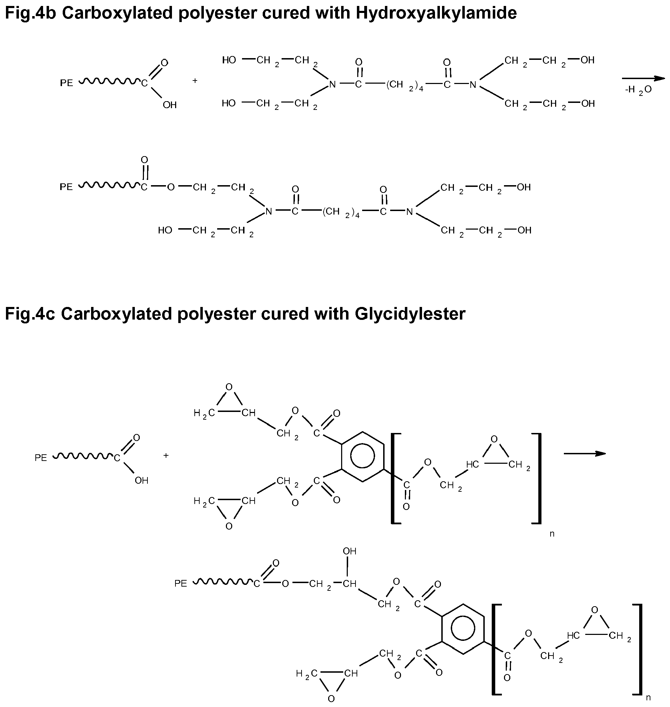

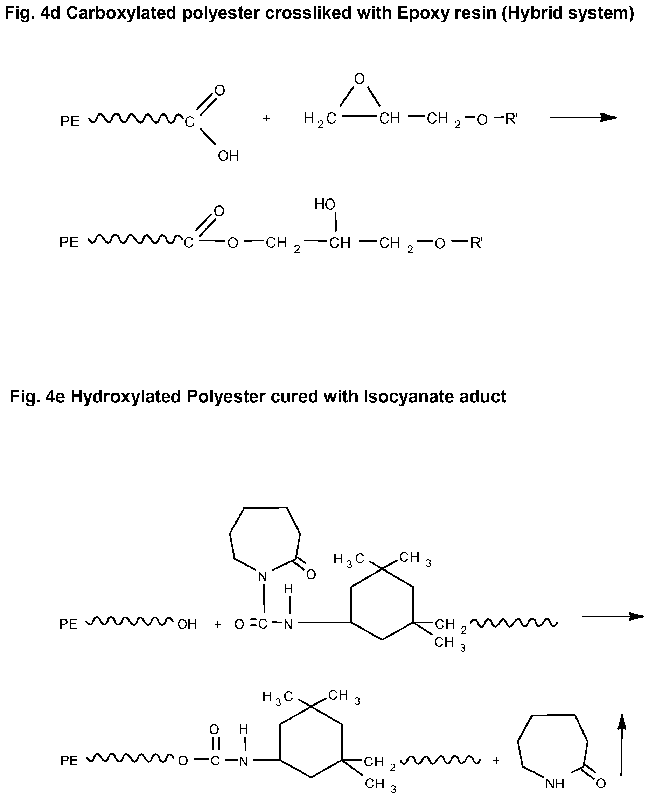

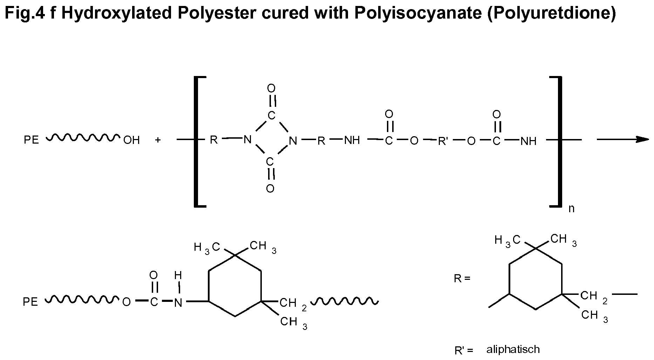

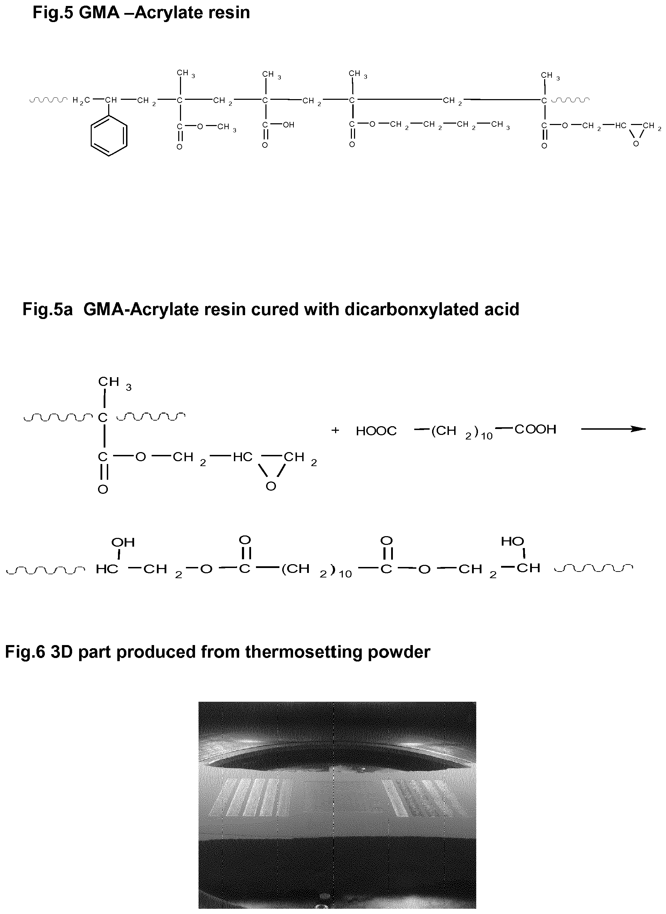

Generally, the thermosetting polymeric powder composition utilized according to the present invention can also be based on known powder coating chemistry with curing mechanism or combinations thereof as described in the following:
- Epoxy systems (Fig. 2), such as epoxy cured with amines, epoxy cured with acid anhydrides, epoxy cured with polyisocyanates and epoxy cured with phenolic resins. In all those systems, the curing process takes place by an addition reaction. In Fig. 3 as enclosed the chemical structure of bisphenol A epoxy resin is shown, which is often used in powder coating formulation and which can also be used according to the present invention as curable polymeric binder material in a powder composition for a Selective Laser Sintering process. Fig. 3a and 3b show the curing reactions of epoxy with typical curing agents, such as amine and acid anhydride.
- Carboxylated polyester systems (Fig. 4), such as carboxylated polyester cured with triglycidylisocyanurat (TGIC) (Fig. 4a), hydroxyalkylamide (HAA) (Fig.4b), glycidylester (Fig.4c); carboxylated polyester cured epoxy resin, a hybrid system (Fig 4d); hydroxyl-terminated polyester cured with polyisocyanates (blocked isocyanate or uretdione) to form a polyurethane network (Fig.4e and Fig.4f).
- Acrylic systems such as glycidyl methacrylate (GMA-acrylic, Fig.5) cured with polycarboxylic acid (e.g. dedecanedioic acid or acelainic acid) (Fig. 5a).
- Unsaturated polyester systems where the crosslinking occurs via free radical polymerization with the use of peroxide catalyst or other thermal initiators. Also the curing via electromagnetic radiation like UV or electron beam alone or in combination with thermal initiators is possible.
- Other crosslinkable materials such as vinyl ethers, bismaleimides, polyurethane/urea; isocyanate/alcohol; reactive functional polyamides, carboxylated polyamide with epoxy, IR crosslinkable polymers etc.

To form a three-dimensional cured polymeric network, the average functionality of the curable polymeric binder material as used according to the present invention must be greater than 2. If the functionality is less than 2, no curing can occur.

According to a preferred embodiment of the present invention, the curable polymeric binder material is present in the thermosetting polymeric powder composition preferably in 99 wt-% or less, more preferably in from 10 to 70 wt-%, particularly preferably in from 20 to 60 wt-%, of the total composition.

**[Catalyst]** Catalyst can also be used according to the present invention. Generally, a catalyst is a compound that increases the speed of a chemical reaction without being consumed in the reaction. The addition of a suitable catalyst decreases the gelation time and can lower the bake temperature needed to achieve acceptable cure of the powder composition used according to the present invention. Catalysts are very specific to a chemical reaction and can be selected from the group comprising Lewis base (e.g. imidazole), ammonium salt, cyclic amidine, Lewis acid complex, amino-phenolic, zinc oxide, amine type, onium, dimethyl stearyl amine, stannous octoate, dibutyl tin dilaurate, dibutyl tin oxide, sulfonic acid/amine, peroxide, etc. Catalysts are typically incorporated at relatively low levels of between 0.1-2 wt-%, depending on how effective the catalyst is. However, higher concentration could also be possible.

**[Initiator]** Also initiators can be used according to the present invention. In contrast to a catalyst, an initiator is consumed in the reaction. The choice of a suitable initiator depends on the powder composition used according to the present invention and is within the knowledge of a person skilled in the art.

In some cases and again depending on the powder composition as used according to the present invention, a mixture of curing agent, catalyst and/or initiator may be used.

**[Absorber]** A sufficient capability of the curable polymeric binder material to absorb energy at present laser wavelength (e.g. for the CO₂ laser at 10.6 µm) is necessary for use in the SLS process. This is apparent for most polymers, as they consist of aliphatic compounds (C-H). Those polymers have, in the majority of cases, some group vibrations in the "fingerprint" infrared region sufficient to absorb relevant portions of 10.6 µm radiation. In the case of a poor absorption capability, an increase of laser energy power can compensate the effect. However, high laser power could also cause polymer decomposition, therefore in order to compensate this effect, absorbers can be added to the powder composition as used according to the present invention.

The powder composition can also comprise an absorber yielding a desired absorption at a wavelength optimal for laser curing. The absorber may for instance be adapted to absorb at the wave length of 10.6 µm specific for the CO₂ laser. The absorber can be blended together with the polymeric powder composition as used according to the present invention. An example of an absorber is carbon black, specifically for SLS processes using electromagnetic radiation in the IR range. While carbon black is a preferred IR absorber, other pigments such as iron oxide or quinoid rylenedicarboximides can also be used.

**[Filler]** The powder composition according to the present invention may also include filler materials. The particulate filler represents from 10 to 50 wt-% of the total composition, and preferably from 20 to 30 wt-%. The filler materials may include or consist of inert fillers or active fillers and can for instance be selected from the group of carbonate-based mineral fillers, magnesium carbonate, calcium carbonate, barium sulphate, dolomite, kaolin, talc, micro-mica, alumina hydrate, wollastonite, montmorillonite, zeolite, perlite, nano fillers, pigments, such as titanium dioxide, anatase tinanium dioxide, transition metal oxides, graphite, carbon black, silica, alumina, phosphate, borate, silicate and organic fillers, such as polymer powders, like copolymers, elastomers and thermoplastics, used alone or as a mixture of two or more of these materials. Also the waste powder of powder coatings production (cured or uncured) and of 3D printing processes according to the invention could be used as fillers depending on the product requirements.

**[Flow agent]** In order to improve melt flow during production of the 3D objects, a flow agent can be added to the thermosetting polymeric powder composition used according to the present invention. Preferably this flow agent is of substantially spherical shape. The flow agent can for instance be an inorganic powdered substance having a particle size of less than 20 microns, preferably less than 10 microns, selected from the group consisting of hydrated silicas, amorphous alumina, glassy silicas, glassy phosphates, glassy borates, glassy oxides, titania, talc, mica, fumed silicas, kaolin, attapulgite, calcium silicates, alumina, magnesium silicates and/or mixtures thereof. The flow agent is present only in an amount sufficient to cause the resin powder to flow and level during the layer by layer process employed in the 3D printing process. It is preferred that the thermosetting polymeric powder composition used according to the present invention comprises less than 5 wt-%, more preferably from 0.05 to 2 wt-%, particularly preferably from 0.05 to 1 wt-% of the total composition.

The thermosetting polymeric powder composition used according to the present invention comprises mainly amorphous polymer binder, but preferably together with at least one semicrystalline or crystalline polymer binder, preferably from 0 to 49 wt-% of the total binder content, as an option, preferably together with other additives, to adjust the melt viscosity of the system. (Semi)crystalline polymer binders when added to the powder composition used according to the present invention are able to produce parts with significantly improvement in flexibility and elasticity, while amorphous binder offers very good dimensional accuracy, feature resolution and surface finish, depending on the grain size of the powder.

**[Particle grain size]** largely affects the precision and density of each 3D printing process. A smaller particle size is favorable for building a higher precision to the 3D objects. On the other hand, a too small particle size of the polymeric powder composition will make it difficult to spread the powder because it causes the powder to self-reunite. Considering the cost of milling, the precision and the density of 3D objects, and the difficulty of spreading powder, a main particle size of the thermosetting polymeric powder composition of 1 to 250 µm, preferably 20 to 100 µm, and more preferably 40 to 80 µm is chosen. In connection therewith it is also preferred if the curable polymeric binder material has at least two maxima in the particle size distribution, which maxima differentiate at least by a factor of 1.5, preferably by a factor of 2.

The production process of the thermosetting polymeric powder composition used according to the present invention, mainly the milling process, requires resin (polymeric binder material) components with rather high softening temperatures. The glass transition and/or melting point temperature of the polymeric binder materials used according to the present invention should preferably be above 40 °C, otherwise the materials would fuse during the milling process or would need cryogenic milling. Selection of the polymeric binder material for the subject powder composition is preferably based on this requirement regarding the glass transition temperature. This property generally results in a relatively hard (brittle) cured printed 3D object so that it is necessary to cure the polymeric binder material effectively, in order to balance and provide for flexibility of the produced 3D object to optimum levels.

The particles of the thermosetting polymeric powder composition used according to the present invention are not allowed to agglomerate. The finer the particles are, the higher the effects of surface energy are. If the particles are very fine, some agglomerated amounts are no longer able to be fluidized resulting in the forming of specks and leveling defects in films produced.

The number average molecular weight of the polymeric binder material used according to the present invention is preferably in the range of 1,000 to 15,000 Dalton, more preferably in the range of 1,500 to 7,500 Dalton. Mechanical properties of the curable polymeric binder material, such as flexibility and impact strength, are mostly dependent on the number average molecular weight (Mₙ), while viscosity is a function of the weight average molecular weight (M_{w}). To maximize the physical properties and retain a low melt viscosity, the polydispersity (M_{w}/Mₙ) should approach unity. The molecular weight of the curable polymeric binder material used according to the present invention will influence the T_{g} of the binder material. As already mentioned, the T_{g} of the polymeric binder material used according to the present invention should be at least 40°C, preferably higher. The T_{g} must be high enough to resist sintering and agglomeration during - maybe cooled - storage and shipping of the powder, but low enough to promote maximum flow and leveling.

Preferably, in order to support fluidization of the thermosetting polymeric powder composition used according to the present invention, additives are added and/or, for example, the particle surfaces of the powder composition are covered with nano-particles. The composition used for 3D printing should have low melt viscosity, therefore polymeric ingredients of the powder composition used according to the present invention are preferably selected not only to have relatively high glass transition temperatures of above 40 °C, but also to have low average molecular masses. Crystalline polymers can be added to the composition to optimize the melt viscosity because they have relatively sharp melting temperature and low melt viscosity.

The powder compositions used according to the present invention have only a short time after melting to coalesce and flow before cross-linking starts. Therefore, the melt viscosity, functionality and reaction rate of the polymeric binder material must be carefully controlled.

In the SLS process for instance, the bed of the part to be printed is first pre-heated by the heating system to a temperature referred to as part bed temperature (T_{b}). Part distortion and laser power can be decreased by operating T_{b} at the highest temperature possible, but not above the softening temperature points (Tₛ) of the polymers contained in the powder composition as used, otherwise polymer powders will stick together and be not freely flowable.

Amorphous polymers, as they are preferably used in the present invention as curable polymeric binder material, exhibit a glass transition temperature (T_{g}) below which they are solid. Depending on their particle size and molecular weight, amorphous polymers are during the 3D printing process preheated to a temperature near T_{g} and will then melt if the temperature further rises above T_{g}. Above T_{g}, amorphous polymers become first leathery or rubbery and then liquid. Therefore, Mₚ of an amorphous polymer is T_{g}. The brittleness temperature T_{b} should be kept close to T_{g} but not beyond T_{g}, otherwise the particles of amorphous polymer powders will stick together and distributing the powder will become difficult. Therefore, T_{b} is set closely above T_{g}, which can be obtained from its DSC curves.

In the SLS process, laser radiation, in particular CO₂ laser light with a wavelength of about 10.6 µm, is used to selectively sinter/melt the thermosetting polymeric powder composition, thereby converting the layer into a liquid phase. Under the heat produced by laser absorption, also the curing (crosslinking) reactions occur within the selected area, thus providing for an at least partial curing/crosslinking of this layer, curing/crosslinking this layer with/to the previously printed layer, and leaving free functionalities in this layer for enabling curing/cross-linking of this layer with the next printed layer. Locally, full coalescence of the particles in the top powder layer is necessary, as well as adhesion (via curing/crosslinking reactions) to previously printed layers. Such localized curing can be optimized by carefully chosen processing conditions, thermoconductivity of the sample and the mixture of reactants. Preferably, a scanning system along with a preferably automated control of laser parameters is used, including control of laser power, pulse repetition rate, scanning frequency, scanning speed and size of laser beam. Regarding the powder material used according to the present invention, the degree of curing (crosslinking) during formation of each layer can be for example controlled by the amount of curing agent present in the material, the resin to hardener ratio, the amount of catalyst, if any, present, the particle size distribution PSD as well as by the thickness of each printed layer. Providing for only a partial curing (cross-linking) when printing one layer leaves free functionalities, thus enabling curing/cross-linking of this layer with the immediately previously printed layer as well as with the next printed layer. Final curing of the printed 3D object is provided for by the heat treatment step after printing.

During each step of the 3D printing process, the mixture of the powdered thermosetting polymeric powder composition is applied to the target area in a range of thickness of preferably from 100 to 200 µm, more preferably 100 µm. Once the powder layer is leveled to form a smooth surface, depending on the 3D printing process used, it is for example in case of an SLS process exposed to radiation from a typically 50 watt (up to 200 watt) CO₂ laser with a wavelength of preferably 10.6 µm. The focused beam diameter is preferably between 400 to 700 µm to confine the heating of sample to a reasonably small region. When the energy of the laser is kept constant at eg. 50 watts, the intensity of the exposure can be controlled by varying the scan rate, which can be adjusted from 0 mm/s up to 12,000 mm/s, and which preferably is set between 2,000 to 6,000 mm/s at laser intensities in the rage of 100 to 800 J/cm³.

If the laser is scanned too quickly over the sample, curing may not be achieved at all because any one spot does not absorb sufficient energy to initiate curing. The other extreme is when the scanning speed too low, then the spot would be overheated and the deposited energy would spread outward from the irradiated area, thus curing a greater area than desired. It is within the knowledge of a person skilled in the art to choose from the above mentioned parameters in a way to provide for a suitable degree of curing during formation of each layer as well as to leave free functionalities within the layer for curing/crosslinking with the next layer.

When working with a material which does not absorb the laser energy as strongly, the absorption depth may exceed the depth of focus of the laser beam. For this case, it is likely that the depth of focus will be the factor which most determines the confinement of laser energy in the direction normal to the sample surface. Beyond the depth of focus, the laser energy would decrease sufficiently that curing would no longer be induced.

The laser spacing (hatch spacing) is usually less than the laser beam diameter. The full cross-section of the 3D object may not be sintered if the laser spacing is too far, presently the laser spacing is normally in the range between 200 and 300 µm and preferred to be 200 µm. Each pass of laser causes the thermosetting polymeric powder composition to fuse and to initiate curing. With each successive pass of the laser beam, the film then formed is also first fused, simultaneously curing is initiated within the film, and additionally the film is also crosslinked with the film formed during the previous pass. This process is repeated layer by layer until the desired 3D object is completed.

Generally, the use of the thermosetting polymeric powder composition described above in a 3D printing process is according to the present invention followed by an additional heat treatment step of the printed 3D object. Accordingly, the above-mentioned disclosure can also be read on any 3D printing process, preferably on a SLS process, in which process the disclosed thermosetting polymeric powder composition is used and which process comprises the above-mentioned additional heat treatment step of the printed, partially cured object.

The present invention will now be explained with reference to the following examples, to which it is not restricted.

### Test methods:

The tensile properties (tensile strength, tensile modulus and elongation at break) were measured according to DIN EN ISO 527 on a Zwick/Roell Z100 universal testing machine equipped with a load cell of 5 kN. Crosshead speed was 1 mm/min for the determination of E Modulus, which was obtained by linear regression in the strain range between 0.1 and 0.25 %. After reaching 0.25 % strain, the crosshead speed was increased to 50 mm/min for the remainder of the test.

Differential Scanning Calorimetry (DSC) measurements of the parts were performed with a Mettler-Toledo DSC 30 with sample weights between 7 and 10 mg. Samples were heated under nitrogen atmosphere from 25 to 300 °C with 20 °C/min for the curing degree evaluation. Degree of cure can be evaluated via the two most common means: 1) quantifying residual cure in the as-received material (in our case the printed part directly from the SLS machine) and 2) measuring the shift in the glass transition temperature. By knowing the heat of reaction of the 100% unreacted material, the curing degree of the sample can be calculated. Full curing can be measured by exothermic heat formation of DSC or by change in the glass transition Tg (lower than 5 % shift) over timer at a certain temperature.

Density: Density of the printed 3D object was measured according to the Archimedes principle. The weight of two cubes was measured, both dry and immersed in water. The density was calculated based on the difference between the two measurements. Reported values are the arithmetic means of the results for the two individually measured cubes.

### Examples

### Composition Example 1

The mixture was composed of 600 parts of Uralac® P3490 (DSM), a saturated carboxylated polyester resin, 45 parts of Araldite® PT-910 (Huntsman), 320 parts of Titanium dioxide (Kronos® 2160, Kronos Titan GmbH), 15 parts of Resiflow PV 5 (Worlée-Chemie GmbH), 8 parts of Accelerator DT-3126 (Huntsman) and 7 parts of Benzoin. All components were premixed in a high-speed mixer for 1 min and then extruded in a twin-screw ZSK-18 extruder at a screw speed of 400 rpm with a rear-zone temperature of 80 °C and a front-zone temperature of 90 °C. In an alternative setting of the extruder, a temperature gradient of 40 to 100 °C and a cooling device for the feeding area was used. The compound obtained was then cooled down, granulated and fine ground to obtain a powder having a D50 of less than 80 µm. The powder can be used in a 3D printer, for example in a SLS laser sintering 3D-printing machine.

### Composition Example 2

The mixture was composed of 600 parts of Uralac® P3490, 45 parts of Araldite® PT-910 (Huntsman), 15 parts of Resiflow PV 5 (Worlée-Chemie GmbH), 8 parts of Accelerator DT-3126 (Huntsman), 7 parts of Benzoin and 10 parts of short carbon fibers. The carbon fibers used had an average length of 60 µm and can be obtained under the product designation Tenax®-A HAT M100 (Toho Tenax Europe GmbH). All components were premixed in a high-speed mixer for 1 min and then extruded in a twin-screw ZSK-18 extruder at a screw speed of 400 rpm with a rear-zone temperature of 90 °C and a front-zone temperature of 100 °C. In an alternative setting of the extruder, a temperature gradient of 40 to 100 °C and a cooling device for the feeding area was used. The compound obtained was then cooled down, granulated and fine ground to obtain a powder having a D50 of less than 100 µm. The powder can be used in a 3D printer, for example in a SLS laser sintering 3D-printing machine.

### Composition Example 3

The mixture was composed of 500 parts Uralac® P 1580 (DSM), a saturated OH-polyester resin, 215 parts of Vestagon® B 1530 (Evonik), 15 parts of Resiflow PV 5 (Worlée-Chemie GmbH) and 7 parts of Benzoin. All components were premixed in a high-speed mixer for 1 min and then extruded in a twin-screw ZSK-18 extruder at a screw speed of 400 rpm with a rear-zone temperature of 90 °C and a front-zone temperature of 100 °C. In an alternative setting of the extruder, a temperature gradient of 40 to 100 °C and a cooling device for the feeding area was used. The compound obtained was then cooled down, granulated and fine ground to obtain a powder having a D50 of less than 100 µm. The powder can be used in a 3D printer, for example in a SLS laser sintering 3D-printing machine.

### Composition Example 4

The mixture was composed of 790 parts Uralac® P 6401 (DSM), a saturated carboxylated polyester resin, 60 parts of TGIC (Huntsmann), 15 parts of Resiflow PV 5 (Worlée-Chemie GmbH), 5 parts of Benzoin and 350 parts of Titanium dioxide (Kronos® 2160, Kronos Titan GmbH). All components were premixed in a high-speed mixer for 1 min and then extruded in a twin-screw ZSK-18 extruder at a screw speed of 400 rpm with a rear-zone temperature of 90 °C and a front-zone temperature of 100 °C. In an alternative setting of the extruder, a temperature gradient of 40 to 100 °C and a cooling device for the feeding area was used. The compound obtained was then cooled down, granulated and fine ground to obtain a powder having a D50 of less than 100 µm. The powder can be used in a 3D printer, for example in a SLS laser sintering 3D-printing machine.

### Composition Example 5

The mixture was composed of 350 parts of Uralac® P 3450 (DSM), a saturated carboxylated polyester resin, 150 parts of Araldite® GT 7004 (Huntsmann), 7 parts of Resiflow PV 5 (Worlée-Chemie GmbH), 4 parts of Benzoin and 230 parts of Titanium dioxide (Kronos® 2160, Kronos Titan GmbH). All components were premixed in a high-speed mixer for 1 min and then extruded in a twin-screw ZSK-18 extruder at a screw speed of 400 rpm with a rear-zone temperature of 90 °C and a front-zone temperature of 100 °C. In an alternative setting of the extruder, a temperature gradient of 40 to 100 °C and a cooling device for the feeding area was used. The compound obtained was then cooled down, granulated and fine ground to obtain a powder having a D50 of less than 100 µm. The powder can be used in a 3D printer, for example in a SLS laser sintering 3D-printing machine.

### Composition Example 6

The mixture was composed of 350 parts of UVECOAT 2100 (Allnex), an unsaturated polyester resin, 13 parts of photo initiators, 6 parts of MODAFLOW® Powder 6000, 2 parts of Benzoin. All components were premixed in a high-speed mixer for 1 min and then extruded in a twin-screw ZSK-18 extruder at a screw speed of 400 rpm with a rear-zone temperature of 90 °C and a front-zone temperature of 100 °C. In an alternative setting of the extruder, zone temperatures of 40/60/80/100/90 °C and a cooling device for the feeding area was used. The compound obtained was then cooled down, granulated and fine ground to obtain a powder having a D50 of less than 80 µm. The powder can be used in a 3D printer, for example in a SLS laser sintering 3D-printing machine.

### Composition Example 7

The mixture was composed of 440 parts of Crylcoat 1506-6 (Allnex), a saturated polyester resin, 290 parts of Araldite® GT7220 (Huntsman), 25 parts of Reafree C4705-10 (Arkema), 10 parts of Eutomer B31 (Eutec Chemical), 15 parts of Powderadd 9083 (Lubrizol), 2 parts of Tinuvin 144 (BASF), 230 parts of Titan Tiona RCL 696 (Cristal). All components were premixed in a high-speed mixer for 1 min and then extruded in a twin-screw ZSK-18 extruder at a screw speed of 600 rpm with zone temperatures of 40/60/80/100/90 °C and a cooling device for the feeding area. The compound obtained was then cooled down, granulated and fine ground to obtain a powder having a D50 of less than 100 µm. The powder can be used in a 3D printer, for example in a SLS laser sintering 3D-printing machine.

### Composition Example 8

The mixture was composed of 440 parts of Crylcoat 1506-6 (Allnex), a saturated polyester resin, 290 parts of Araldite® GT7220 (Huntsman), 25 parts of Reafree C4705-10 (Arkema), 10 parts of Eutomer B31 (Eutec Chemical), 15 parts of Powderadd 9083 (Lubrizol), 2 parts of Tinuvin 144 (BASF), 230 parts of Titan Tiona RCL 696 (Cristal), and 10 parts of thermoplast (Staphyloid 3832), which are core-shell multilayer organic fine particles. All components were premixed in a high-speed mixer for 1 min and then extruded in a twin-screw ZSK-18 extruder at a screw speed of 600 rpm with zone temperatures of 40/60/80/100/90 °C and a cooling device for the feeding area. The compound obtained was then cooled down, granulated and fine ground to obtain a powder having a D50 of less than 100 µm. The powder can be used in a 3D printer, for example in a SLS laser sintering 3D-printing machine.

### Composition Example 9

The mixture was composed of 440 parts of Crylcoat 1506-6 (Allnex), a saturated polyester resin, 290 parts of Araldite® GT7220 (Huntsman), 25 parts of Reafree C4705-10 (Arkema), 10 parts of Eutomer B31 (Eutec Chemical), 15 parts of Powderadd 9083 (Lubrizol), 2 parts of Tinuvin 144 (BASF), 230 parts of Titan Tiona RCL 696 (Cristal), and with 5 parts of Si-C micron fibers (Si-TUFF, SC 210). All components were premixed in a high-speed mixer for 1 min and then extruded in a twin-screw ZSK-18 extruder at a screw speed of 600 rpm with zone temperatures of 40/60/80/100/90 °C and a cooling device for the feeding area. The compound obtained was then cooled down, granulated and fine ground to obtain a powder (reinforced with whisker fiber Si-C) having a D50 of less than 100 µm. The powder can be used in a 3D printer, for example in a SLS laser sintering 3D-printing machine.

### Example 10: Production of thermosetting 3D parts by using the SLS process

The powders of examples 1-7 were used to produce 3D articles (Fig. 6) using a SLS process as following: Each of the powder of examples 1-7 was applied to the build surface stage in a DTM Sinterstation 2000 (DTM Corporation, Austin, TX, USA). During each step of the SLS process, the powder of examples 1-7 were applied to the target area in a range of thickness of 100 µm. Once the powder layer has been leveled to form a smooth surface, it was exposed to radiation from a 10-30 W CO₂ laser with a wavelength of 10.6 µm at a scanning speed of about 2,500 to 5,000 mm/s, 2 to 4 scan counts and with a scan spacing of between 0.2 and 0.3 mm. The powder had a sufficient to good flowability, resulting in a smooth and leveled powder bed, where the part bed temperature was in the range from 50 °C to 80 °C; no curling occurred in this range.

The energy input required for the production of parts was between 10 and 40 W. The parts sintered at the highest energy input indicate satisfactory properties after SLS processing. As already mentioned, by varying the energy input the curing degree can be varied.

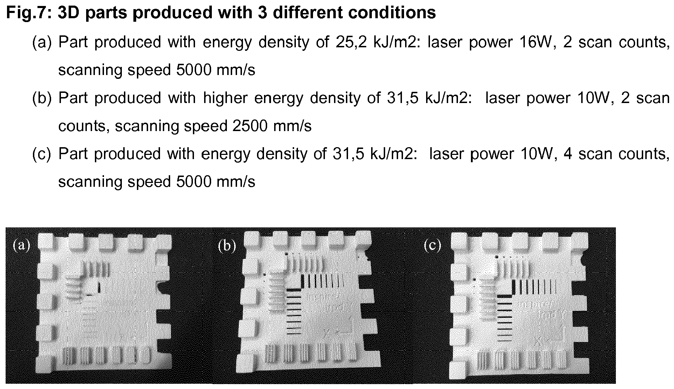

Fig.7 demonstrates the results of printing three identical 3D objects using the powder composition according to the present invention, the 3D objects having a total built height of 5.76 mm and being produced with the above-mentioned SLS DTM Sinterstation 2000 using three different process parameters:
(a) the 3D object was produced with an energy density of 25.2 kJ/m² (252 J/cm³), laser power 16W, 2 scan counts, scanning speed 5,000 mm/s,
(b) the 3D object was produced with a higher energy density of 31.5 kJ/m² (315 J/cm³), laser power 10W, 2 scan counts, scanning speed 2,500 mm/s and
(c) the 3D object was produced with an energy density of also 31.5 kJ/m² (315 J/cm³), laser power 10W, but 4 scan counts, scanning speed 5,000 mm/s.
The 3D objects thus built were strong enough to be sandblasted though, which allowed for easy removal of powder. Most delicate features survived. Parts (b) and (c) show better results with slits and holes being open, which is a key indicator for good part resolution. Increasing lateral growth in Z direction was observed. The surface of the 3D object sintered at 2 scan counts x 10W at a low scanning speed 2,500 mm/s (b) was smoother and showed less errors than the 3D object sintered at 4 scan counts x 10W at a high scanning speed 5,000 mm/s (c). The edges of the parts were quite round rather than sharp. With higher energy density obtained from process conditions of (b) and (c) the curing degree of the parts produced after SLS process reached about 47 % while (a) reached only about 21 % of curing degree calculated from DSC experiments.

It can be seen that by controlling the degree of curing (crosslinking) during formation of each layer only a partial curing (cross-linking) when printing one layer can be provided, which leaves free functionalities. Such free functionalities then enable a curing/crosslinking of this layer with the immediately previously printed layer and, once the next layer is printed, with this next printed layer.

### Example 11: SLS production of the thermosetting 3D parts made out of powders described in composition Examples 7, 8 and 9 with additional heat treatment step and their mechanical properties.

SLS build setup and parameters for Examples 7, 8 and 9 are shown in Table 1.
The 3D objects were built on a DTM Sinterstation 2000 commercial laser sintering machine. This build contained one multifunctional part for the evaluation of resolution, detailed structures, dimensional accuracy and smoothness of the printed 3D objects and ISO 527-1 tensile bars for mechanical properties. Both were sintered with process parameters using two different settings, namely set 1 and set 2 as listed in Table 1. Tensile properties were measured according to ISO 527-1 after a post-curing process as described above.

To balance powder bed caking with curing, the temperature profile was chosen such that the part bed temperature of the 3D object to be printed was 70 °C during sintering of the first few layers of the objects. The temperature then was gradually reduced to 67 °C.

**Table 1. Scanning parameters for parts in runs with set 1 and 2**

| **Set #** | **Laser power** | **Scan speed** | **Scan spacing** | **Scan count** | **Layer thickness** | **Energy density** | **Part bed temp** |
|---|---|---|---|---|---|---|---|
| **[-]** | **[W]** | **[mm/s]** | **[mm]** | **[**-**]** | **[mm]** | **[J/cm³]** | [**°C**] |
| 1 | 20 | 5000 | 0.3 | 2 | 0.1 | 267 | 70 |
| 2 | 20 | 5000 | 0.2 | 1 | 0.1 | 200 | 70 |

After printing, the objects underwent an additional heat treatment step for post curing in a programmable Thermoconcept KM 20/13 chamber oven using a temperature ramp of from 50 to 140°C with a rate of 5 to 10 °C/h and then holding at 140°C for min 2h.

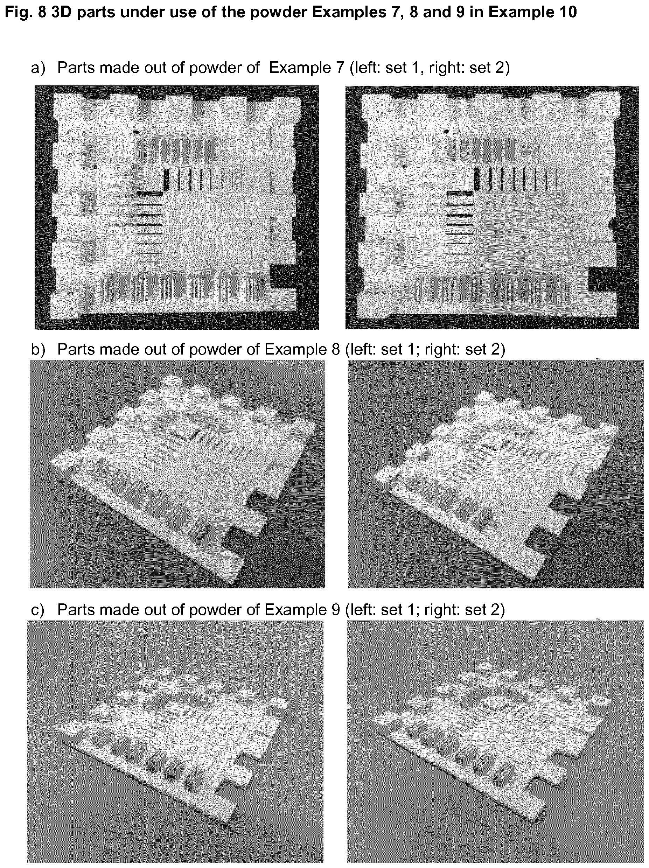

Parts thus printed using the composition of examples 7, 8 and 9 using set 1 and 2 parameters and treated for post curing are shown in Fig.8. Such parts are stable and can be sandblasted at low pressure, the surfaces are smooth. The contours of the parts are sharp and the resolution is good.

Despite some slight surface imperfections of the parameter set 2 parts (made using the compositions of example 8 and 9), all parts exhibited sharp contours and good resolution. The measured dimensional deviations were less than 5 %. Parameter set 1 nonetheless seems to provide for both cases of Example 8 and 9 an optimal mix between part accuracy and initial, pre-curing mechanical properties.

For the best performing parts from runs using set 1 and 2, an E-Modulus of approximately 1800 MPa is measured, as well as a tensile strength of almost 39 MPa. Typical values for PA12 published at TDS of DuraForm® PA Plastic are 1586 MPa and 43 MPa respectively and 14 % elongation at break. Values published in US 9 233 505 B2 are 1550 MPa and 46 MPa, respectively, and 12 % for elongation at break. In terms of strength and stiffness, post-cured parts printed from the composition of example 7 are similar, or even better than PA12 parts. With only a few percent strain, the elongation at break of parts printed from the composition of example 7 however is relatively low, which is a typical characteristic of the cured thermoset system according to the present invention.

Therefore, thermoplastic modifiers and Si-C fibers were utilized when printing parts using the composition of example 8 and example 9, respectively, in order to improve the flexibility.
The average values of tensile properties and their associated standard deviations of post-cured parts printed from the composition of example 8 and 9 and comparative example 7 are shown in Table 2.

**Table 2. Tensile properties of parts printed from the composition of example 7, 8 and 9**

| **Sample designation** | **E-Modulus** | **Ultimate tensile strength** | **Strain at break** |
|---|---|---|---|
| | **[MPa]** | **[MPa]** | **[%]** |
| Example 7 set 1 | 1824 ± 148 | 38.8 ± 0.3 | 3.3 ± 0.01 |
| Example 7 set 2 | 1771 ± 134 | 34.7 ± 3.1 | 3.06 ± 0.3 |
| Example 8 set 1 | 1335 ± 20 | 31.6 ± 0.6 | 13.2 ± 1.9 |
| Example 8 set 2 | 1225 ± 53 | 28.0 ± 1.6 | 8.7 ± 1.2 |
| Example 9 set 1 | 2154 ± 25 | 43.6 ± 0.7 | 8.32 ± 0.6 |
| Example 9 set 2 | 2100 ± 33 | 40.7 ± 0.7 | 8.9 ± 1.29 |
| DuraForm® PA | 1586 | 43 | 14 |

The difference in resulting mechanical properties as an effect of post-curing and chosen process parameters is somewhat larger for parts printed from the composition of example 8 than for using the composition of example 7, especially when the strain at break is concerned. It is conceivable that both a higher energy density and longer time at higher temperature as a result of double scanning results in better dispersion and adhesion of the thermoplastic modifier.

The addition of SiC fibers has overall positive effect on the stiffness and strength and flexibility of the material compared to parts printed from the composition of example 7. The elongation at break shows the most drastic increase. Both E-Modulus and ultimate tensile strength were increased by roughly 15 % for the reinforced material, though elongation at break increased impressively from 3.3 % for the neat material, to 8.4 % for the SiC modified material.

In summary, the post curing parameters chosen after printing the composition of example 7 also proved suitable for post curing of the compositions of example 8 and example 9. The best parameter set for printing was found to be the one with the highest energy density (267 J/cm³), also double scanning proved to be favorable in case of the compositions of examples 7 to 9. For these parts, both the best surface and mechanical properties were obtained.

### Example 12 Effects of the SLS process parameters on curing degree in coorelation with mechanical properties

To vary energy input (or energy density, which is more typically used for the SLS process) it was chosen to use a different number of scans per layer. In contrast to increasing laser power or reducing scan spacing and speed, increasing the number of scans leads to a more gradual energy input, which minimizes the risk of thermal decomposition of the material. Table 3 shows the correlation between energy density input and achieved curing degree of the part made of the composition of example 7:

**Table 3**

| **Run #** | **Laser Power** | **Scan speed** | **Hatch distance** | **Scan count** | **Layer thickness** | **Energy density** | **Part bed temperatur e** | **Curing degree** | **Density** |
|---|---|---|---|---|---|---|---|---|---|
| **[-]** | **[W]** | **[mm/s]** | **[mm]** | **[-]** | **[mm]** | **[J/cm³]** | **[°C]** | **[%]** | **[g/cm³]** |
| 1 | 10 | 5000 | 0.2 | 1 | 0.08 | 125 | 65 | 16.3 | 1.24 |
| 2 | 20 | 5000 | 0.3 | 1 | 0.08 | 167 | 65 | 26.34 | 1.33 |
| 3 | 20 | 5000 | 0.3 | 2 | 0.1 | 267 | 65 | 40.97 | 1.48 |
| 4 | 20 | 5000 | 0.2 | 1 | 0.1 | 200 | 65 | 36.88 | 1.42 |
| 5 | 15 | 5000 | 0.25 | 2 | 0.09 | 267 | 65 | 40.26 | 1.44 |

The build was set up in such a way, that the scanning time throughout the build could be kept more or less constant. Before the actual sintering, each build was preceded by a warm-up phase consisting of depositing 1 mm of powder in total, in 10 to 13 layers (depending on the layer thickness) in 30 second intervals at operating temperature. After build completion, a total of 0.5 mm powder was deposited on the finalized build. The total build height amounted to 11.5 mm. With layer thicknesses of 0.08, 0.09, and 0.1 mm, this build height corresponds to 144, 128, and 115 layers respectively.

Parts were scanned both in horizontal and vertical direction, alternatingly between layers. Parts that were scanned twice per layer were scanned both in horizontal and in vertical direction. Before each layer, a machine algorithm pseudo-randomly chose the order of the parts to scan. This ensured an equal distribution of layer time for all parts.

The density of the produced parts was assessed by measurement of the two 1 cm³ cubes according to the Archimedes principle. The measured densities are listed in Table 3 showing the correlation between the density of the parts and the energy density with which they were produced. A clear trend can be made out. With increasing energy density, the density of parts increases as well.

A likely explanation for this behavior is that with lower energy densities it is not possible to completely melt the material. Alternatively, a higher energy density leads to higher temperatures, and lower viscosity, so the material may flow and fuse better.

Parts were built with a high precision. Both small and large features could be fabricated. Parts produced by run 1 in Table 3 with the lowest energy density input and resulted lowest curing degree are quite fragile and brittle, but can be sandblasted with a low pressure. Surfaces are smooth on top, slightly rougher on the bottom. The contours are sharp and the resolution is excellent.

Before mechanical measurements, the post-curing process was done to avoid deformation as the parts not completely cured after SLS step. The temperature ramp was from 50 to 140 °C with a rate of 5-10 °C/h, then held at 140 °C for 1 h. E-Modulus, tensile strength and elongation at break of post cured samples are shown in Table 4 in correlation with the curing degree and density of the parts after the printing step.

**Table 4**

| **Sample** | **E-Modulus** | **Tensile strength** | **Elongation at break** | **Curing Dgree*** | **Density** |
|---|---|---|---|---|---|
| **designation** | **[MPa]** | **[MPa]** | **[%]** | **[%]** | **[g/cm³]** |
| Run 1 | 862 ± 163 | 15.05 ± 2.81 | 2.28 ± 0.39 | 16.3 | 1.24 |
| Run 2 | 1389 ± 45 | 26.65 ± 0.74 | 2.29 ± 0.03 | 26.34 | 1.33 |
| Run 3 | 1824 ± 148 | 38.82 ± 0.3 | 3.3 ± 0.01 | 40.97 | 1.48 |
| Run 4 | 1771 ± 134 | 34.67 ± 3.09 | 3.06 ± 0.25 | 36.88 | 1.42 |
| Run 5 | 1537 ± 135 | 33.26 ± 2.2 | 2.97 ± 0.45 | 40.26 | 1.43 |

| | | | | | |
|---|---|---|---|---|---|
| *curing degree of printed parts after SLS step | | | | | |

It was observed that the mechanical properties of the printed tensile bars (Table 4) having about 40% of curing degree after the printing step improved much after post curing. Run 3 shows the best results for mechanical properties and the part still has very precise structures and very good resolution.

Comparing samples made of run 3 and run 4, using the same SLS parameters, except only difference in number of scanning, it was observed that both a higher energy density and longer time at higher temperature as a result of double scanning (run 3) provided better dispersion and adhesion of the printed part. As a result, the density of the part is higher leading to the better mechanical properties as shown in Table 4.

However, the curing degree of the part is not the only issue effect on the final mechanical properties. Comparing run 3 and run 5 with the same energy density input (267 J/ cm³) and the same number of scanning (2), only difference in laser energy (20 and 15 W respectively), mechanical results obtained from run 3 shown in Table 4 are higher although both leaded to nearly the same curing degree of parts. It is assumed that the durability and resilience of parts were also dependent on the energy input by the laser to achieve better melting for better coalescence of the powder particle to molten particles. The laser energy should be sufficient enough to melt the powder but not too high to decompose the powder. It was found that for the powder of example 7 an energy density input of 267 J/ cm³ achieved the best results, which was a good balance of good mechanical properties and good resolution with high dimensional accuracy. The maximum energy density in this case was 320 J/cm³, but higher than that smoking was observed during the SLS scanning.

### Example 13 Effect/ Impact of post curing on the mechanical properties of the printed part.

Tensile tests were performed on post-cured parts, as well as parts that came directly from the SLS machine. Table 5 shows mechanical properties of samples produced from condition Set 1 listed in Table 1 before post-curing and after post-curing for 2h.

**Table 5**

| Example 7 produced with set 1 run condition | | | **without post-cured** | **Post-cured** |
|---|---|---|---|---|
| **Tensile strength** (x-direction) | MPa | ISO-527 | 15.59 | 44 |
| **Tensile E-modulus** (x-direction) | MPa | ISO-527 | 2708 | 2547 |
| **Tensile elongation at break** (x-direction) | % | ISO-527 | 0.54 | 3.8 |

As the parts produced from set 1 had about 40 % of curing degree, there were still free functional groups left inside of the printed part (which is a clear indication that when using a thermosetting polymeric powder composition according to the present invention the different layers provided in each pass during the printing process were reacting with each other due to the presence of free functional groups in each layer) and between the layers of the part, therefore further reaction occurred during the post curing process. 100% curing was achieved after post curing confirmed by DSC measurement. As a result, the mechanical properties of the printed and cured objects were improved significantly for tensile strength as shown in Table 5 and the elongation is also improved as a result of the better interlayer adhesion.

From the experiments it was found that when a curing degree higher than 60 %, especially when higher than 90 %, was obtained during the printing step, the resolution and the accuracy of the printed part were reduced.

### Example 14 SLS Scanning strategy to reduce thermal bleeding and caking effect

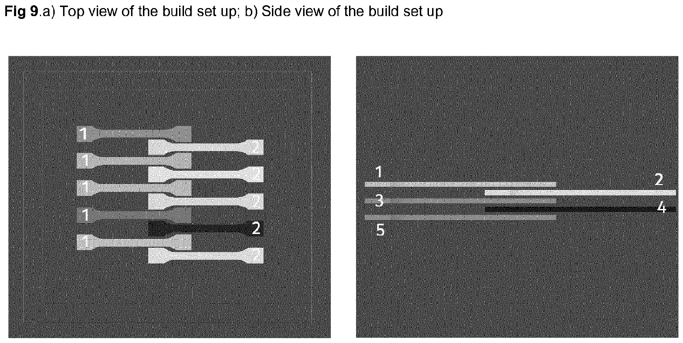

This example is included in order to show how to reduce the thermo bleeding effect and caking which is an issue when working with thermoset curable powder under SLS. The parts made using the composition of example 7 were built on a DTM Sinterstation 2500 Plus commercial laser sintering machine using run condition of set 1 listed in Table 1. Note that different reactive powder systems will require different scanning condition. Set 1 is the best optimized condition for the composition of example 7 to obtain good mechanical properties and still have high resolution and accuracy of dimension. The build contained 25 tensile bars, divided into sets of five (see Fig. 9a), which is a top view of the build set up, and Fig. 9b, which is a side view of the build set up.

The parts were positioned in such a way that at any time during the build, only 5 tensile bars were built simultaneously. The subsequent set of 5 tensile bars was built with approximately 2.5 mm vertical spacing (25 layers). In addition, the sets were built with an offset with respect to one another, in order to minimize thermal influences from other, previously built parts.

The build was preceded by a warm-up phase which consisted of the application of 20 layers at process temperature (70 °C). The build was completed with a cool-down phase consisting of the application of 10 layers at process temperature.

In an attempt to minimize powder caking, the part bed temperature profile was set according to the
optimal condition set 1 listed in Table 1. These settings involve setting the part bed temperature at 70 °C as soon as the first few layers of the parts are built, and then reducing to 67 °C for the remaining layers of the parts. This procedure is repeated for each of the sets of built tensile bars.

It was possible to build 25 tensile bars in a single build without any laser-related processing issues. As was already found out during that, the part bed temperature is critical to on the one hand prevent curling, and on the other hand, prevent powder caking.

## Claims

1. Use of a thermosetting polymeric powder composition in a 3D printing process to produce a 3D duroplast object, the composition comprising at least one curable polymeric binder material with free functional groups, wherein during the 3D printing process the formed object is only partially cured and the printing process is being followed by a heat treatment step to fully cure the printed object into a 3D duroplast object.

2. Use according to claim 1, **characterized in that** the object formed after the 3D printing process has a curing degree of below 90 %, preferably below 60 %, most preferably between 35 % and 60 %.

3. Use according to claim 1 or 2, **characterized in that** after the heat treatment step the 3D duroplast object has a curing degree of 90 % or above.

4. Use according to any of the preceding claims, **characterized in that** the curable polymeric binder material is selected from the group comprising compounds with at least two functional groups comprising carbon-carbon double bonds, compounds with at least two epoxy functional groups, compounds with at least two carboxylic acid functional groups, compounds with at least two hydroxyl functional groups, compounds derived from acrylic acid or methacrylic acid and/or mixtures thereof, and that after the 3D printing process free functional groups of the different layers of the formed object are reacting with each other to form the 3D duroplast object.

5. Use according to any of the preceding claims, **characterized in that** during each pass of the printing process the polymeric binder material is at least partially cured within the layer thus formed and also at least partially crosslinked with the previous layer.

6. Use according to any of the preceding claims, **characterized in that** the heat treatment step of the printed object comprises using a temperature ramp of from 50 to between 110 and 160°C with a heating rate of not higher than 20 °C/h and preferably of 5 to 10 °C/h and then holding the 3D-object at a temperature of between 110 and 160°C until it has a curing degree of 90% or above, preferably of 99 % or above and/or for min 2h.

7. Use according to any of the preceding claims, **characterized in that** the powder composition comprises at least one amorphous curable polymeric binder material, preferably in an amount of from 60 to 100 wt-% of the total binder content.

8. Use according to any of the preceding claims, **characterized in that** the composition comprises at least one curable polymeric binder material together with at least one member of the group consisting of curing agent, catalyst, initiator, and mixtures thereof, which member is able to cure said polymeric binder material.

9. Use according to any of the preceding claims, **characterized in that** the polymeric binder material is curable by polyaddition, and/or polycondensation and/or radical polymerization.

10. Use according to any of the preceding claims, **characterized in that** the polymeric binder material contains a polyester which is build up from at least 2.5 wt-%, preferably 5 wt-% and most preferably 10 wt-% linear aliphatic monomers, the percentage being based on the overall monomer content.

11. Use according to any of the preceding claims, **characterized in that** the curable polymeric binder material is present in the thermosetting polymeric powder composition in 99 wt-% or less, more preferably in from 10 to 70 wt-%, particularly preferably in from 20 to 60 wt-%, of the total composition.

12. Use according to any of the preceding claims, **characterized in that** the thermosetting polymeric powder composition comprises at least one semicrystalline or crystalline polymer binder, preferably from 0 to 49 wt-% of the total binder content.

13. Use according to any of the preceding claims, **characterized in that** the glass transition and/or melting point temperatures of the polymeric binder materials are above 40 °C.

14. 3D printing process with an additional heat treatment step of the printed 3D-object, **characterized in that** a thermosetting polymeric powder composition according to one of claims 1 to 13 is used.

15. Process according to claim 14, **characterized in that** the 3D printing process is a SLS process.
